# EUROPÄISCHE PATENTANMELDUNG

(11) **EP 1 962 034 A2**
(43) Veröffentlichungstag der Anmeldung: **27.08.2008**
(21) Anmeldenummer: 08002606.5
(22) Anmeldetag: 13.02.2008
(51) Int. Cl.: F24J 2/26, F24J 2/46

(54) **Sonnenkollektor**

(30) Priorität: 26.02.2007 DE 202007002920 U
(71) Anmelder: KBB Kollektorbau GmbH, 12439 Berlin (DE)
(72) Erfinder: Fintelmann, Stephan, 12435 Berlin (DE)
(74) Vertreter: Siekmann, Gunnar

(57) **Zusammenfassung**

Bei einem Sonnenkollektor mit wenigstens einer transparente Eigenschaften aufweisenden Abdeckplatte (1), wenigstens einem die Abdeckplatte (1) einfassenden Aufnahmerahmen (2) und mit wenigstens einem hinter der Abdeckplatte (1) angeordneten Wärmetauscher (3) sind zwischen dem Wärmetauscher (3) und dem Aufnahmerahmen (2) wenigstens zwei den Wärmetauscher im wesentlichen auf Zug beanspruchende Verbindungsmittel (6) angeordnet.

## Beschreibung

Die Erfindung betrifft einen Sonnenkollektor mit wenigstens einer transparente Eigenschaften aufweisenden Abdeckplatte, wenigstens einem die Abdeckplatte einfassenden Aufnahmerahmen und mit wenigstens einem hinter der Abdeckplatte angeordneten Wärmetauscher.

Unterhalb des Wärmetauschers ist üblicherweise eine Wärmedämmschicht angeordnet. Die Abdeckplatte bildet zusammen mit dem Aufnahmerahmen ein Gehäuse aus, welches unterseitig mit einer Bodenplatte verschlossen ist. Um Wärmeverluste zu begrenzen, muß ein Kontakt des Wärmetauschers mit dem Gehäuse unbedingt vermieden werden. Da der Wärmetauscher jedoch großen Temperaturschwankungen ausgesetzt ist, muß er sich gegen den Aufnahmerahmen in seiner Fläche ausdehnen können. Diese Bewegungsfreiheit darf jedoch nicht dazu führen, daß der Wärmetauscher durch Transport und Montage des Sonnenkollektors gegen das Gehäuse rutschen kann. Zur Lagefixierung des Wärmetauschers ist es bekannt, das Gehäuse mit einer Wärmedämmung auszukleiden, über welche sich der Wärmetauscher im Gehäuse abstützt. Ferner ist es bekannt, die Lagefixierung durch eine Wärmeträgerleitung zu unterstützen, über deren Zu- und Ableitung sich der Wärmetauscher im Gehäuse abstützt. Auch sind sogenannte Absorber-Niederhalter bekannt, die am Aufnahmerahmen befestigt werden und den Wärmetauscher auf die unter dem Wärmetauscher liegende Wärmedämmschicht drücken. Aus der DE 201 05 162 U1 ist ein gattungsgemäßer Sonnenkollektor bekannt, dessen Wärmetauscher mittels federnd gelagerter Halteschenkel an der Bodenplatte des Sonnenkollektors befestigt ist.

Sämtliche bekannte Lösungen weisen jedoch den Nachteil auf, daß sich der Wärmetauscher beim Transport, bei der Montage oder durch thermische Materialausdehnung bedingt, wirft, beult oder wölbt und so bis an die Abdeckscheibe herangedrückt werden kann. Diese Verformungsbewegungen treten in erster Linie während des Betriebes auf, wenn die Sonnenkollektoren hohe Temperaturen annehmen. Größere Neigungswinkel, gemessen gegen die Horizontale, verstärken die Verformungsbewegung weiter. Ferner können bei sogenannten thermischen Schocks Verformungsbewegungen auftreten, welche zu bleibenden Bauteilverformungen und damit zu Funktionsbeeinträchtigungen des Sonnenkollektors führen.

Der Erfindung liegt die Aufgabe zugrunde, einen Sonnenkollektor der eingangs genannten Gattung aufzuzeigen, bei dem ein Werfen, Beulen und Wölben des Wärmetauschers weitgehend vermieden ist.

Diese Aufgabe ist erfindungsgemäß durch einen Sonnenkollektor mit den Merkmalen des Schutzanspruches 1 gelöst. Vorteilhafte Weiterbildungen der Erfindung sind in den Unteransprüchen angegeben.

Der erfindungsgemäße Sonnenkollektor zeichnet sich dadurch aus, daß zwischen seinem Wärmetauscher und seinem Aufnahmerahmen wenigstens zwei den Wärmetauscher im wesentlichen auf Zug beanspruchende Verbindungsmittel angeordnet sind. Damit ist der Wärmetauscher innerhalb des Aufnahmerahmens unabhängig von Temperatureinflüssen und Krafteinwirkungen nahezu formstabil und lagefest aufgenommen. Nachteilige Berührungen des Wärmetauschers mit dem Aufnahmerahmen oder mit der Abdeckplatte sind mit Vorteil vermieden. Auch durch Transport- und Montagevorgänge auf den erfindungsgemäßen Sonnenkollektor einwirkende Stoß-, Massenträgheits- und Schwerkräfte werden von den Verbindungsmitteln zuverlässig aufgefangen, so daß Beschädigungen und bleibende Verformungen am Wärmetauscher zuverlässig verhindert sind. Vorzugsweise sind zwischen dem Wärmetauscher und dem Aufnahmerahmen mehr als zwei Verbindungsmittel angeordnet, mit denen der Wärmetauscher in seiner gesamten Fläche möglichst gleichmäßig auf Zug beansprucht wird. Weist der Wärmetauscher ein Rohrmäander mit schlangenartig verlegtem Wärmeträgerrohr auf, ist die Zugbeanspruchung mindestens in einer Richtung quer zur Hauptorientierung des Wärmeträgerrohres auszurichten. Grundsätzlich ist es jedoch ebenso denkbar, die Verbindungsmittel derart anzuordnen, daß der Wärmetauscher in zwei oder mehreren Richtungen auf Zug beansprucht wird. Die Verbindungsmittel weisen einen Federweg auf, mit welchem wenigstens die maximal mögliche Wärmeausdehnung des Wärmetauschers ausgleichbar ist. Bevorzugt weisen die Verbindungsmittel jedoch deutlich größere Federwege auf, die dem Wärmetauscher maximal zulässige Auslenkbewegungen innerhalb seines Aufnahmerahmens gestatten, so daß maximal große Stoß-, Massenträgheits- und Schwerkräfte aufgefangen werden können.

Nach einer ersten Weiterbildung der Erfindung sind zwischen der Abdeckplatte und dem Wärmetauscher Abstandshalter angeordnet. Die Abstandshalter bilden eine mechanische Begrenzung aus, mit der eine Verformungsbewegung des Wärmetauschers an die Abdeckplatte heran behindert wird. Die Abstandshalter tragen somit vorteilhaft dazu bei, die vom Wärmetauscher aufzunehmenden Zugbeanspruchungen möglichst klein zu halten.

Um die Wärmeverluste weiter reduzieren zu können, sollte jeder Abstandshalter wenigstens eine thermische Entkopplung aufweisen. Diese besteht darin, daß der Abstandshalter ganz oder teilweise aus einem wärmeisolierenden Material hergestellt ist oder daß ihm das thermisch isolierende Material zugeordnet ist.

Nach einer besonders vorteilhaften Weiterbildung der Erfindung ist vorgesehen, daß wenigstens eines der Verbindungsmittel eine vorgespannte Feder aufweist. Die Federvorspannkraft dient der Zugbeanspruchung des Wärmetauschers und der Federweg dient dem Ausgleich der Wärmeausdehnungen des Wärmetauschers. Als Federn sind Schrauben-, Spiral- oder Elastomerfedem denkbar, besonders geeignet sind jedoch als Zugfedern ausgebildete Schraubenfedern. Die Dämpfungseigenschaften werden durch Auswahl entsprechender Federkennlinien derart eingestellt, daß der Wärmetauscher bei Einhaltung der erforderlichen Zugbeanspruchung maximal vor Schäden geschützt ist.

Um die Wärmeverluste des erfindungsgemäßen Sonnenkollektors weiter begrenzen zu können, wird vorgeschlagen, daß auch jedes Verbindungsmittel wenigstens eine thermische Entkopplung aufweist. Die thermische Entkopplung besteht auch hier aus einem wärmeisolierenden Material, aus welchem das Verbindungsmittel ganz oder teilweise hergestellt ist. Die thermische Entkopplung kann jedoch ebenfalls durch separate Bauteile erfolgen, welche den Verbindungsmitteln unmittelbar zugeordnet sind.

Vorzugsweise weist der Wärmetauscher wenigstens eine Trägerplatte mit einer lichtabsorbierenden Beschichtung sowie wenigstens eine mit der Trägerplatte verbundene Wärmeträgerleitung auf. An der lichtabsorbierenden Beschichtung wird die Sonnenstrahlung in Wärme umgewandelt und an ein in der Wärmeträgerleitung fließendes Wärmeträgermedium abgegeben. Die Trägerplatte besteht in der Regel aus einem sehr dünnen Kupfer- oder Aluminiumblech, an dessen Unterseite die Wärmeträgerleitung in Form eines Wärmeträgerrohres wärmeleitend befestigt ist. Es ist jedoch ebenso denkbar, die Wärmeträgerrohre und die Trägerplatte einstückig auszubilden, beispielsweise in Form aufeinandergeschweißter Prägeplatten oder in Form von Stegdoppelplatten.

Nach einer nächsten Weiterbildung der Erfindung ist wenigstens eines der Verbindungsmittel an der Trägerplatte des Wärmetauschers befestigt. Die Befestigung erfolgt vorzugsweise über die Randbereiche der Trägerplatte. Dazu weist die Trägerplatte beispielsweise randseitig angeordnete Bohrungen, Ösen oder Laschen auf, in welche die Verbindungsmittel, vorzugsweise Zugfedern, eingehängt werden können. Die Befestigungen können jedoch auch über Schweiß-, Löt-, Kleb- oder Nietverbindungen hergestellt werden. Um ein Ausreißen der Befestigungsstellen an der recht dünnen Trägerplatte zu vermeiden, können die Verbindungsmittel zusätzlich noch stab- oder plattenförmige Haltemittel aufweisen, über welche eine vorteilhaft großflächige Krafteinleitung erfolgt.

Alternativ zur Befestigung der Verbindungsmittel an der Trägerplatte wird vorgeschlagen, daß die Wärmeträgerleitung als Wärmeträgerrohr ausgebildet ist, und daß wenigstens eines der Verbindungsmittel an der Wärmeträgerleitung des Wärmetauschers befestigt ist. Bei dieser Ausführungsform fungiert die Wärmeträgerleitung als Haltemittel, über dessen mit der Trägerplatte gemeinsame Verbindungsstellen die Zugkräfte besonders gleichmäßig im Wärmetauscher verteilt werden. Vorzugsweise sind jedoch wenigstens zwei der Verbindungsmittel an der Wärmeträgerleitung des Wärmetauschers einander gegenüberliegend befestigt, so daß auf die Anbringung von Befestigungsmitteln im Randbereich der Trägerplatte vorteilhaft verzichtet werden kann.

Nach einer nächsten Weiterbildung der Erfindung weist der Aufnahmerahmen wenigstens eine die Wärmeträgerleitung aufnehmende Durchlaßöffnung auf, wobei wenigstens eines der Verbindungsmittel in der Durchlaßöffnung angeordnet ist. Da der Abstand zwischen der Wärmeträgerleitung und dem Aufnahmerahmen im Bereich der Durchlaßöffnungen besonders klein ist, kann ein in diesem Bereich angeordnetes Verbindungsmittel konstruktiv einfach und besonders kostengünstig ausgebildet werden. In vielen Fällen weist der Aufnahmerahmen jedoch zwei oder vier beabstandet zueinander angeordnete Durchlaßöffnungen auf, so daß vorzugsweise in jeder Durchlaßöffnung ein Verbindungsmittel angeordnet ist. Diese in den Durchlaßöffnungen angeordneten Verbindungsmittel dienen beispielsweise zur einseitigen Befestigung des Wärmetauschers am Aufnahmerahmen und weisen allenfalls kleine Federwege auf. Die gegenüberliegende Befestigung des Wärmetauschers erfolgt dann über Verbindungsmittel, welche größere Federwege aufweisen.

Es ist jedoch besonders vorteilhaft, wenn das in der Durchlaßöffnung des Aufnahmerahmens angeordnete Verbindungsmittel als Gummidichtung ausgebildet ist. So ist mit den Verbindungsmittel zumindest ein kleiner Federweg realisiert, welcher zum Auffangen von Stoß-, Massenträgheit- und Schwerkräften unabdingbar ist. Selbstverständlich können die in den Auslaßöffnungen des Aufnahmerahmens angeordneten Verbindungsmittel auch Federn, beispielsweise in Form von metallischen Federelementen oder Elastomeranordnungen, aufweisen, mit welchen weitaus größere Federwege realisierbar sind.

Ein Ausführungsbeispiel der Erfindung, aus dem sich weitere erfinderische Merkmale ergeben, ist in der Zeichnung dargestellt. Es zeigen:
- Fig. 1:: eine Seitenansicht eines erfindungsgemäßen Sonnenkollektors im Schnitt; und
- Fig. 2:: eine Draufsicht auf einen erfindungsgemäßen Sonnenkollektor.

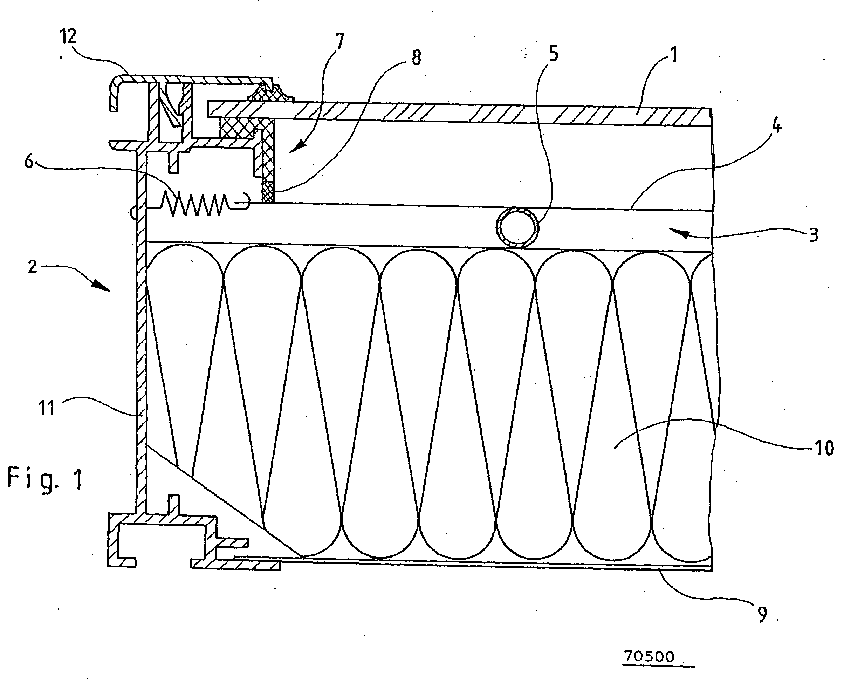

Die Fig. 1 zeigt eine geschnittene Seitenansicht des erfindungsgemäßen Sonnenkollektors, welcher im wesentlichen aus einer transparente Eigenschaften aufweisenden Abdeckplatte 1, einem die Abdeckplatte 1 einfassenden Aufnahmerahmen 2 und einem hinter der Abdeckplatte 1 angeordneten Wärmetauscher 3 zusammengesetzt ist. Der Wärmetauscher 3 weist eine Trägerplatte 4 mit einer lichtabsorbierenden Beschichtung sowie eine mit der Trägerplatte 4 wärmeleitend verbundene Wärmeträgerleitung 5 auf, welche als Wärmeträgerrohr ausgebildet ist. Zwischen dem Wärmetauscher 3 und dem Aufnahmerahmen 2 sind den Wärmetauscher 3 im wesentlichen auf Zug beanspruchende Verbindungsmittel 6 angeordnet. Die Verbindungsmittel 6 sind als innenseitig am Aufnahmerahmen 2 und randseitig an der Trägerplatte 4 eingehängte Spiralfedern ausgebildet. Zwischen der Abdeckplatte 1 und dem Wärmetauscher 3 sind Abstandshalter 7 angeordnet, die eine thermische Entkopplung 8 aus einem wärmeisolierenden Material aufweisen. Die Abdeckplatte 1 bildet zusammen mit dem Aufnahmerahmen 2 ein Gehäuse aus, welches unterseitig mit einer Bodenplatte 9 verschlossen ist. Zwischen dem Wärmetauscher 3 und der Bodenplatte 9 ist eine Wärmedämmschicht 10 angeordnet. Der Aufnahmerahmen 2 besteht aus einzelnen Basisprofilen 11 sowie mit den Basisprofilen 11 verrastbaren Abdeckleisten 12. Die Abdeckplatte 1 ist umlaufend zwischen den Basisprofilen 11 und den Abdeckleisten 12 des Aufnahmerahmens 2 eingefaßt.

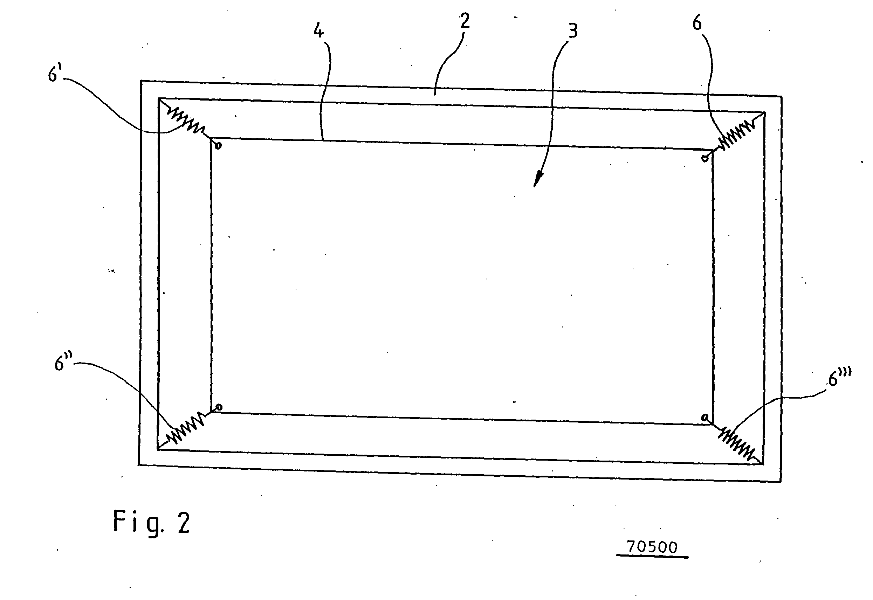

Die Fig. 2 zeigt eine Draufsicht auf einen erfindungsgemäßen Sonnenkollektor, aus der ersichtlich ist, daß zwischen der Trägerplatte 4 des Wärmetauschers 3 und dem Aufnahmerahmen 2 insgesamt vier den Wärmetauscher 3 auf Zug beanspruchende Verbindungsmittel 6, 6', 6", 6''' angeordnet sind. Mit den Verbindungsmitteln 6, 6', 6", 6''' sind die einander jeweils zugeordneten Eckbereiche der rechteckig ausgebildeten Trägerplatte 4 und des ebenfalls rechteckig ausgebildeten Aufnahmerahmens 2 miteinander verbunden, so daß der Wärmetauscher 3 in seinen diagonalen Richtungen auf Zug beansprucht wird.

## Patentansprüche

1. Sonnenkollektor mit wenigstens einer transparente Eigenschaften aufweisenden Abdeckplatte (1), wenigstens einem die Abdeckplatte (1) einfassenden Aufnahmerahmen (2) und mit wenigstens einem hinter der Abdeckplatte (1) angeordneten Wärmetauscher (3),
**dadurch gekennzeichnet,**
**daß** zwischen dem Wärmetauscher (3) und dem Aufnahmerahmen (2) wenigstens zwei den Wärmetauscher (3) im wesentlichen auf Zug beanspruchende Verbindungsmittel (6) angeordnet sind.

2. Sonnenkollektor nach Anspruch 1, **dadurch gekennzeichnet, daß** zwischen der Abdeckplatte (1) und dem Wärmetauscher (3) Abstandshalter (7) angeordnet sind.

3. Sonnenkollektor nach Anspruch 2, **dadurch gekennzeichnet, daß** jeder Abstandshalter (7) wenigstens eine thermische Entkopplung (8) aufweist.

4. Sonnenkollektor nach einem der Ansprüche 1 bis 3, **dadurch gekennzeichnet daß** wenigstens eines der Verbindungsmittel (6) eine vorgespannte Feder aufweist.

5. Sonnenkollektor nach einem der Ansprüche 1 bis 4, **dadurch gekennzeichnet, daß** jedes Verbindungsmittel (6) wenigstens eine thermische Entkopplung aufweist.

6. Sonnenkollektor nach einem der Ansprüche 1 bis 5, **dadurch gekennzeichnet, daß** der Wärmetauscher (3) wenigstens eine Trägerplatte (4) mit einer lichtabsorbierenden Beschichtung sowie wenigstens eine mit der Trägerplatte (4) verbundene Wärmeträgerleitung (5) aufweist.

7. Sonnenkollektor nach Anspruch 6, **dadurch gekennzeichnet, daß** wenigstens eines der Verbindungsmittel (6) an der Trägerplatte (4) des Wärmetauschers (3) befestigt ist.

8. Sonnenkollektor nach einem der Ansprüche 6 und 7, **dadurch gekennzeichnet, daß** die Wärmeträgerleitung (5) als Wärmeträgerrohr ausgebildet ist, und daß wenigstens eines der Verbindungsmittel (6) an der Wärmeträgerleitung (5) des Wärmetauschers (3) befestigt ist.

9. Sonnenkollektor nach einem der Ansprüche 6 bis 8, **dadurch gekennzeichnet, daß** der Aufnahmerahmen (2) wenigstens eine die Wärmeträgerleitung (5) aufnehmende Durchlaßöffnung aufweist, wobei wenigstens eines der Verbindungsmittel (6) in der Durchlaßöffnung angeordnet ist.

10. Sonnenkollektor nach Anspruch 9, **dadurch gekennzeichnet, daß** das in der Durchlaßöffnung des Aufnahmerahmens (2) angeordnete Verbindungsmittel (6) als Gummidichtung ausgebildet ist.
